# FASCICULE DE BREVET EUROPEEN

(11) **EP 3 957 093 B1**
(45) Date de publication et mention de la délivrance du brevet: **26.04.2023**
(21) Numéro de dépôt: 20725848.4
(22) Date de dépôt: 06.03.2020
(51) Int. Cl.: H04W 4/44, H04W 12/06

(54) **PROCÉDÉ ET DISPOSITIF DE COMMUNICATION POUR VÉHICULE DANS UN RÉSEAU SANS FIL DE TYPE AD HOC**
KOMMUNIKATIONSVERFAHREN UND -VORRICHTUNG FÜR EIN FAHRZEUG IN EINEM AD-HOC-DRAHTLOSNETZWERK
COMMUNICATION METHOD AND DEVICE FOR A VEHICLE IN AN AD-HOC WIRELESS NETWORK

(30) Priorité: 16.04.2019 FR 1904073
(43) Date de publication de la demande: 23.02.2022
(73) Titulaire: PSA Automobiles SA, 78300 Poissy (FR)
(72) Inventeur: BENSATOR, Saleh, 92130 ISSY LES MOULINEAUX (FR); MAFRICA, Stefano, 92100 BOULOGNE BILLANCOURT (FR); SERVEL, Alain, 78350 JOUY EN JOSAS (FR)
(86) Numéro de dépôt international: PCT/FR2020/050467
(87) Numéro de publication internationale: WO 2020/212670

(56) Documents cités:
- KR-A- 20040 076 509
- US-A1- 2011 151 834
- US-A1- 2018 124 696

## Description

### Domaine technique

L'invention concerne les procédés et dispositifs de communication entre noeuds d'un réseau ad hoc, au moins un noeud du réseau étant mobile et embarqué dans au moins un véhicule, notamment de type automobile.

### Arrière-plan technologique

Les véhicules contemporains embarquent des systèmes ou fonction d'aide à la conduite qui fournissent aux conducteurs de véhicules qui en sont équipés des informations sur leur environnement et/ou une assistance active dans la conduite du véhicule. Les systèmes d'aide à la conduite les plus aboutis assurent le contrôle du véhicule qui devient un véhicule dit autonome, c'est-à-dire un véhicule apte à rouler dans l'environnement routier sans intervention du conducteur.

Pour améliorer la sécurité sur les routes, de nouvelles technologies voient le jour qui permettent l'échange d'informations entre les véhicules et/ou entre les véhicules et l'infrastructure qui les entoure. Ainsi, de nouvelles technologies de l'information et de la communication appliquées au domaine des transports sont apparues, telles que l'ITS G5 (de l'anglais « Intelligent Transportation System G5 » ou en français « Système de transport intelligent G5 ») en Europe ou DSRC (de l'anglais « Dedicated Short Range Communications » ou en français « Communications dédiées à courte portée ») aux Etats-Unis d'Amérique qui reposent tous les deux sur le standard IEEE 802.11p ou encore la technologie basée sur les réseaux cellulaires nommée C-V2X (de l'anglais « Cellular - Vehicle to Everything » ou en français « Cellulaire - Véhicule vers tout ») qui s'appuie sur la 4G basé sur LTE (de l'anglais « Long Term Evolution » ou en français « Evolution à long terme ») et bientôt la 5G.

Du fait de la vitesse de déplacement du véhicule et du nombre de stations d'un réseau avec lesquelles le véhicule peut communiquer au gré de son déplacement, les procédures d'authentification sont allégées ce qui peut créer des failles de sécurité pour simplifier l'accès du véhicule aux différentes stations du réseau au fur et à mesure de son déplacement, et ce même à grande vitesse (par exemple jusqu'à 250 km/h).

Les documents suivants sont pertinents pour la présente demande de brevet:

US 2011/151834 A1 (DABHOLKAR HARSHA [US] ET AL) 23 juin 2011

US 2018/124696 A1 (NAIR SURESH P [US] ET AL) 3 mai 2018

### Résumé de l'invention

Un objet de la présente invention est de proposer un accès à un ou plusieurs services de protocole internet dans un réseau ad hoc en garantissant que les noeuds communiquant entre eux font partie d'une infrastructure de confiance.

Selon un premier aspect, l'invention concerne un procédé de communication dans un réseau sans fil ad hoc comprenant une pluralité de noeuds, un premier noeud de la pluralité correspondant à un dispositif embarqué dans un véhicule, le procédé comprenant les étapes suivantes, mises en oeuvre par le premier noeud :
- réception d'au moins un message émis par un deuxième noeud du réseau sans fil sur un canal de contrôle, le au moins un message comprenant une première information représentative d'un identifiant du deuxième noeud ;
- vérification de l'intégrité du au moins un message et de l'authenticité de la première information à partir de données d'en-tête du au moins un message et d'une signature associée à le au moins un message ;
- réception de données informant le premier noeud qu'un service d'accès au protocole internet est disponible, les données comprenant une deuxième information représentative de l'identifiant de l'émetteur des données, les données étant reçues sur un canal de service ;
- comparaison de la première information et de la deuxième information ;
- accès au protocole internet sur le canal de service si la première information et la deuxième information correspondent.

Selon une variante, la vérification de l'intégrité du au moins un message comprend la réception d'une clé publique du deuxième noeud, le premier noeud et le deuxième noeud faisant partie d'une infrastructure à clés publiques.

Selon une autre variante, l'accès au protocole internet comprend la transmission d'une requête pour obtenir une adresse de protocole internet vers le deuxième noeud, l'adresse de protocole internet étant allouée au premier noeud par le deuxième noeud à réception de la requête.

Selon une variante supplémentaire, le réseau sans fil ad hoc utilise un protocole de communication parmi les protocoles suivants :
- IEEE 802.11p;
- IEEE 802.11s ;
- 3GPP LTE-V2X.

Selon encore une variante, le canal de contrôle est un canal de type CCH et le canal de service est un canal de type SCH.

Selon une variante supplémentaire, le au moins un message est de type CAM ou DENM.

Selon une autre variante, le deuxième noeud est une Unité Bord de Route (UBR).

Selon un deuxième aspect, l'invention concerne un dispositif de communication dans un réseau sans fil ad hoc comprenant une pluralité de noeuds, le dispositif correspondant à un premier noeud de la pluralité embarqué dans un véhicule, le dispositif comprenant une mémoire associée à un processeur configuré pour la mise en oeuvre des étapes du procédé selon le premier aspect de l'invention.

Selon un troisième aspect, l'invention concerne un véhicule, par exemple de type automobile, comprenant un dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre de façon schématique un environnement de communication entre un premier noeud et un deuxième noeud d'un réseau ad hoc, selon un exemple de réalisation particulier de la présente invention ;
[Fig. 2] illustre schématiquement un dispositif configuré pour communiquer dans le réseau ad hoc de la figure 1, selon un exemple de réalisation particulier de la présente invention ;
[Fig. 3] illustre un organigramme des différentes étapes d'un procédé de communication dans le réseau ad hoc de la figure 1, selon un exemple de réalisation particulier de la présente invention.

### Description des modes de réalisation

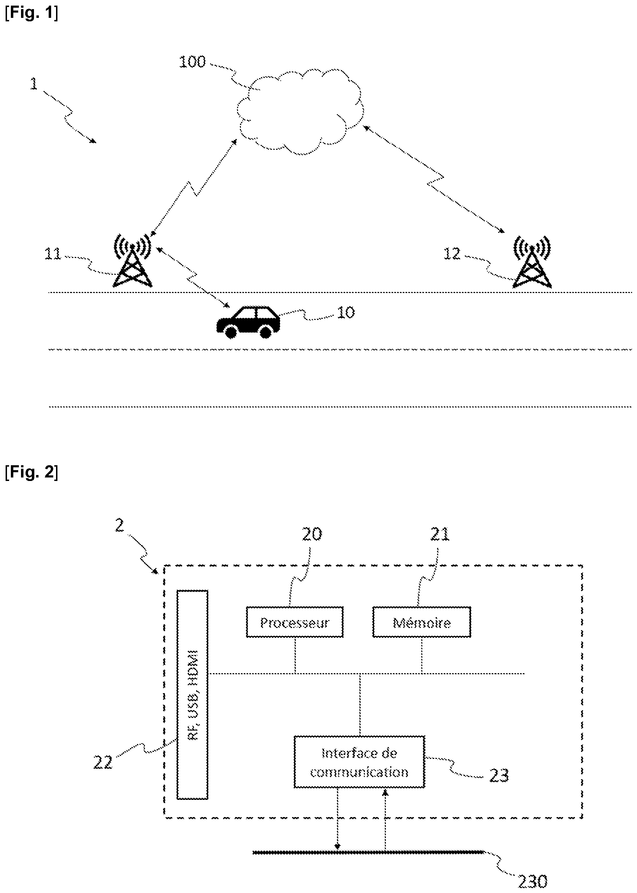

Un procédé et un dispositif de communication dans un réseau sans fil ad hoc vont maintenant être décrits dans ce qui va suivre en référence conjointement aux figures 1 à 3.

Selon un exemple particulier et non limitatif de réalisation de l'invention, un procédé de communication dans un réseau sans fil ad hoc est mis en oeuvre par un premier noeud du réseau embarqué dans un véhicule. Le réseau ad hoc comprend une pluralité de noeuds, dont le premier noeud. Pour mettre en place la communication, un ou plusieurs messages émis par un deuxième noeud du réseau sans fil sont reçus par le premier noeud. Ces messages sont avantageusement émis sur un canal de contrôle et comprennent chacun un identifiant du deuxième noeud (par exemple son adresse MAC (de l'anglais « Media Access Control » ou en français « Contrôle d'accès au support »). L'intégrité du ou des messages reçus est vérifiée ainsi que l'authenticité de l'identifiant du deuxième noeud en s'appuyant sur les données comprises dans l'en-tête et la signature de chaque message reçu. Le premier noeud reçoit ensuite des données l'informant qu'un service d'accès au protocole internet IP (de l'anglais « Internet Protocol ») est disponible, ces données étant reçues via un canal de service et comprenant un identifiant de l'émetteur de ces données. L'identifiant du deuxième noeud est comparé à l'identifiant de l'émetteur de ces données. Si ces identifiants correspondent, le premier noeud accède au service de protocole internet via le canal de service.

Le premier noeud (et le véhicule qui l'embarque) peut ainsi vérifier que le noeud du réseau proposant un ou plusieurs services IP correspond bien à un noeud identifié du réseau en s'appuyant sur les moyens de sécurité mis en oeuvre sur un canal de contrôle, ces moyens de sécurité n'existant pas sur le canal de service.

[Fig. 1] illustre schématiquement un environnement de communication 1 entre un premier noeud 10 et un deuxième noeud 11 d'un réseau sans fil ad hoc, selon un exemple de réalisation particulier et non limitatif de la présente invention.

La figure 1 illustre un premier noeud 10 embarqué dans un véhicule se déplaçant dans un environnement routier. Le premier noeud 10 et le deuxième noeud 11 font avantageusement partie d'un réseau sans fil ad hoc comprenant une pluralité de noeuds, par exemple 2, 3, 5, 10, 100, 1000 ou plus de noeud. Selon l'exemple particulier de la figure 1, le réseau sans fil ad hoc comprend un troisième noeud 12.

Un réseau sans fil ad hoc (aussi appelé WANET (de l'anglais « Wireless Ad Hoc Network ») ou MANET (de l'anglais « Mobile Ad Hoc Network »)) est un réseau sans fil décentralisé. Contrairement à un réseau centralisé qui s'appuie sur une infrastructure existante comprenant par exemple des routeurs ou des points d'accès reliés entre eux par une infrastructure filaire ou sans-fil, le réseau sans fil ad hoc est constitué de noeuds qui participent chacun au routage des données en retransmettant les données d'un noeud à l'autre, de l'émetteur vers le destinataire, en fonction de la connectivité du réseau et de l'algorithme de routage mis en oeuvre. Le réseau sans fil ad hoc correspond avantageusement à un réseau véhiculaire ad hoc (ou VANET, de l'anglais « Vehicular Ad hoc NETwork ») ou à un réseau véhiculaire ad hoc intelligent (ou InVANET, de l'anglais « Intelligent Vehicular Ad hoc NETwork »). Dans un tel réseau, 2 véhicules ou plus embarquant chacun un noeud peuvent communiquer entre eux dans le cadre d'une communication véhicule à véhicule V2V (de l'anglais « vehicle-to-vehicle ») ; chaque véhicule peut communiquer avec l'infrastructure mise en place dans le cadre d'une communication véhicule à infrastructure V2I (de l'anglais « vehicle-to-infrastructure ») ; chaque véhicule peut communiquer avec un ou des piétons équipés de dispositifs mobiles (par exemple un téléphone intelligent (de l'anglais « Smartphone »)) dans le cadre d'une communication véhicule à piéton V2P (de l'anglais « vehicle-to-pedestrian »).

Le réseau sans fil ad hoc comprend par exemple une ou plusieurs UBR (« Unité Bord de Route »), chacune correspondant à un noeud du réseau, en plus des noeuds équipant les véhicules ou les piétons. Selon cet exemple, les noeuds 11 et 12 correspondent chacun à une UBR. Selon une variante, le réseau sans fil ad hoc comprend une ou plusieurs antennes relais d'un réseau cellulaire, par exemple un réseau cellulaire dit 4G ou 5G, en plus des noeuds équipant les véhicules ou les piétons. Selon cette variante, les noeuds 11 et 12 correspondent chacun à une antenne relais. Selon encore une variante, le réseau sans fil ad hoc comprend une ou plusieurs UBR et une ou plusieurs antennes relais d'un réseau cellulaire, en plus des noeuds équipant les véhicules ou les piétons. Selon cette variante, le noeud 11 correspond par exemple à une UBR et le noeud 12 à une antenne relais.

Les noeuds 11 et 12 sont avantageusement reliés à un ou plusieurs serveurs distants ou au « cloud » 100 (ou en français « nuage ») via une connexion filaire et/ou sans fil. Les noeuds 11 et 12 peuvent ainsi faire office de relais entre le « cloud » 100 et le premier noeud 10.

Le premier noeud 10 établit avantageusement une connexion avec le deuxième noeud 11 lorsque le premier noeud 10 entre dans la zone de couverture (aussi appelée zone d'interférence) du deuxième noeud 11. L'association entre le premier noeud 10 et le deuxième noeud 11 est par exemple réalisée lorsque la qualité d'un signal reçu du deuxième noeud 11 par le premier noeud atteint un niveau suffisant, c'est-à-dire que le niveau de qualité est supérieur à un seuil. La qualité correspond par exemple à un niveau de signal sur bruit, à un taux d'erreur (par exemple le PER (de l'anglais « Packet Error Rate » ou en français « Taux d'erreur paquet ») et/ou au RSSI (de l'anglais « Received Signal Strength Indication » ou en français « Indication de force de signal reçu »). Lorsque le premier noeud 10 se situe dans les zones de couverture de plusieurs noeuds, le premier noeud s'associe par exemple au noeud pour lequel la qualité du signal reçu est la plus élevée et/ou en fonction des services de protocole internet fourni.

L'établissement d'une connexion avec le deuxième noeud 11 comprend par exemple l'accès au protocole internet IP (de l'anglais « Internet Protocol »), notamment à un ou plusieurs services de protocole internet, appelé service IP dans le reste de la description. Un tel accès se fait avantageusement sur un canal de service, par exemple un canal SCH (de l'anglais « Service Channel » ou en français « canal de service ») selon le standard IEEE 802.11p. Pour garantir que le deuxième noeud fait partie de la chaine de confiance, c'est-à-dire appartient à une infrastructure à clés publiques PKI (de l'anglais « Public Key Infrastructure »). Pour ce faire, le premier noeud 10 récupère l'identifiant du deuxième noeud 11 lorsque ce dernier émet des données décrivant les services IP qu'il propose. Ces données émises par le deuxième noeud 11 correspondent par exemple à un paquet de données émis périodiquement par le deuxième noeud 11 pour informer de sa présence sur le réseau. Un tel paquet correspond par exemple au paquet « Router Advertisement » (ou en français « Avertissement de routeur ») tel que défini par le protocole NDP (de l'anglais « Neighbor Discovery Protocol » ou en français « Protocole de découvert de voisin ») utilisé par IPv6. Selon un autre exemple, un tel message ou paquet correspond à une offre DHCP (de l'anglais « Dynamic Host Configuration Protocol Offer » ou en français « Offre de protocole de configuration d'hôte dynamique ») utilisé par IPv4 ou IPv6.

L'identifiant ainsi récupéré sur le canal de service est comparé à un identifiant récupéré précédemment sur un canal de contrôle, par exemple un canal CCH (de l'anglais « Control Channel » ou en français « Canal de contrôle »). Aucun accès au protocole internet IP n'est proposé ou possible sur le canal de contrôle. L'identifiant du deuxième émetteur est obtenu d'un ou plusieurs messages transmis par le deuxième noeud 11 sur le canal de contrôle, par exemple un message de type CAM (de l'anglais « Cooperative Awareness Message » ou en français « Message d'avertissement coopératif ») tel que défini dans la spécification technique ETSI TS 102 637-2 v1.2.1 de mars 2011 ou un message de type DENM (de l'anglais « Decentralized Environmental Notification Message » ou en français « Message de notification environnementale décentralisée ») tel que défini dans la spécification technique ETSI TS 102 637-3 v1.1.1 de septembre 2010. De tels messages comprennent l'identifiant de leur émetteur (par exemple le deuxième noeud 11), par exemple l'adresse MAC de l'émetteur. Par ailleurs, de tels messages sont émis dans le cadre d'une infrastructure à clés publiques (la clé publique de l'émetteur étant par exemple transmise dans le header du message) et sont signés, ce qui permet au noeud récepteur, par exemple le premier noeud 10, de vérifier l'intégrité du message et de vérifier que l'émetteur fait bien partie de la chaine de confiance garantie par l'infrastructure à clés publiques PKI.

Les canaux de contrôle CCH et de service SSH sont par exemple tels que définis dans le document ETSI TS 102 724 v1.1.1 d'octobre 2012.

Si la comparaison entre l'identifiant récupéré sur le canal de contrôle correspond à l'identifiant récupéré sur le canal de service, alors le premier noeud 10 en déduit que l'accès au service IP proposé sur le canal de service est bien émis par un noeud du réseau appartenant à la chaine de confiante garantie par l'infrastructure PKI. Une fois cette vérification faite, le premier noeud 10 peut s'associer au second noeud 11 et obtenir une adresse IP du deuxième noeud 11 pour accéder à un plusieurs services IP.

[Fig. 2] illustre schématiquement un dispositif 2 configuré pour communiquer dans le réseau ad hoc de la figure 1, selon un exemple de réalisation particulier et non limitatif de la présente invention. Le dispositif 2 correspond par exemple au premier noeud 10 embarqué dans un véhicule, au deuxième noeud 11 ou encore à un noeud porté par un piéton, par exemple un téléphone intelligent.

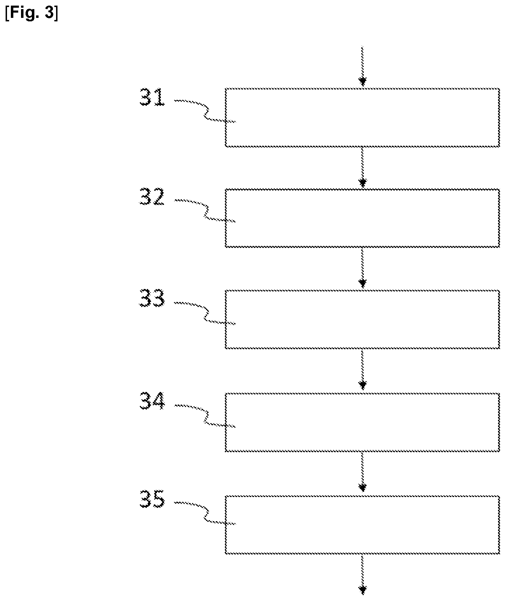

Le dispositif 2 est par exemple configuré pour la mise en oeuvre des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE, une unité bord de route, un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un mode de réalisation particulier et non limitatif, le dispositif 2 comprend un bloc 22 d'éléments d'interface pour communiquer avec des dispositifs externes, par exemple un serveur distant ou le « cloud », d'autres noeuds du réseau ad hoc. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Définition Multimedia Interface », ou « Interface Multimedia Haute Définition » en français).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 2 comprend une interface de communication 23 qui permet d'établir une communication avec d'autres dispositifs (tels que d'autres calculateurs du système embarqué lorsque le dispositif 2 correspond à un calculateur du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs ») ou CAN FD (de l'anglais « Controller Area Network Flexible Data-Rate » ou en français « Réseau de contrôleurs à débit de données flexible »).

Selon un mode de réalisation particulier supplémentaire, le dispositif 2 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 3] illustre un organigramme des différentes étapes d'un procédé de communication dans un réseau sans fil ad hoc, par exemple le réseau ad hoc de la figure 1, selon un exemple de réalisation particulier et non limitatif de la présente invention. Le procédé est par exemple mis en oeuvre par le premier noeud 10 embarqué dans un véhicule ou par le dispositif 2 de la figure 2.

Dans une première étape 31, un ou plusieurs messages émis par un deuxième noeud du réseau sans fil ad hoc sont reçus par le premier noeud sur un canal de contrôle, par exemple un canal de type CCH. Un canal de contrôle permet l'échange de paquets de contrôle pour initier la communication entre 2 noeuds du réseau ad hoc sans fil. Le ou les messages reçus correspondent par exemple à un message CAM, un message DENM ou à la fois un message CAM et un message DENM. Chacun de ces messages comprend avantageusement une première information représentative de l'identifiant, par exemple l'adresse MAC, du deuxième noeud émetteur de ce ou ces messages.

Dans une deuxième étape 32, l'intégrité du ou des messages reçus sur le canal de contrôle est vérifiée en se basant sur la signature de ce ou ces messages. Par ailleurs, l'authenticité de la première information représentative de l'identifiant du deuxième noeud est également vérifiée en se basant sur des informations comprises dans l'entête de chacun de ces messages, par exemple dans une partie sécurisée de l'en-tête comprenant par exemple la clé publique du deuxième noeud. L'ensemble des noeuds appartenant à la même infrastructure à clés publiques, le premier noeud peut ainsi vérifier que le ou les messages ont bien été transmis par un noeud, c'est-à-dire le deuxième noeud, appartenant à une chaine de confiance définie par l'infrastructure à clés publiques mise en oeuvre. Les échanges de données et d'information sur un canal de contrôle, notamment un canal de contrôle de type CCH, sont en effet sécurisés par la mise en oeuvre d'une infrastructure à clés publiques qui permet à chaque noeud recevant un ou plusieurs paquets de contrôle d'un autre noeud sur le canal de contrôle de vérifier que le noeud émetteur fait partie de la chaine de confiance définir par l'infrastructure à clés publiques. Une fois authentifiée, la première information représentative de l'identifiant du deuxième noeud est par exemple stockée, au moins temporairement, en mémoire du premier noeud.

Dans une troisième étape 33, des données sont reçues par le premier noeud sur un canal de service, par exemple un canal de type SCH. Ces données comprennent avantageusement une deuxième information représentative de l'identifiant, par exemple une adresse MAC, de l'émetteur de ces données. A contrario des échanges de données sur un canal de contrôle, l'échange de données et d'informations sur un canal de service n'est pas sécurisé par l'échange de clés publiques d'une PKI. Les deuxièmes données comprennent avantageusement une information quant à la fourniture d'un ou plusieurs services d'accès IP sur un ou plusieurs canaux de service par l'émetteur. A ce stade, le premier noeud n'a aucune assurance quant à l'identité de l'émetteur. Les données reçues sur le canal de service correspondent par exemple à des données d'un ou plusieurs paquets de type « Router Advertisement » ou « DHCP Offer ».

Dans une quatrième étape 34, la première information est comparée à la deuxième information. Si les identifiants diffèrent, le premier noeud n'accède pas au(x) service(s) IP proposé(s) par l'émetteur à la troisième étape, c'est-à-dire que le premier noeud ne s'associe pas à l'émetteur qui ne peut pas être authentifié. Si la première information correspond à la deuxième information, alors le procédé passe à la cinquième étape 35.

Dans une cinquième étape 35, le premier noeud accède au(x) service(s) IP proposé(s) par l'émetteur à la troisième étape puisque cet émetteur correspond au deuxième noeud qui a pu être authentifié comme étant un noeud de la chaine de confiance.

Selon une variante optionnelle de réalisation, l'accès au protocole internet est mis en oeuvre après vérification de la qualité et/ou de la symétrie du signal entre le premier et le deuxième noeud. Selon cette variante, l'accès au protocole internet est mis en oeuvre si et seulement si le niveau de qualité et/ou de symétrie du signal est supérieur à un seuil déterminé.

L'accès au protocole internet comprend par exemple la transmission d'une requête pour obtenir une adresse de protocole internet par le deuxième noeud à destination du deuxième noeud. L'adresse IP est alors allouée au premier noeud par le deuxième noeud à réception de la requête.

Lorsque le premier noeud sort de la zone de couverture du deuxième noeud, le premier noeud se désassocie du deuxième noeud. Les étapes 31 à 35 sont alors avantageusement réitérées pour accéder au protocole internet via un autre noeud du réseau ad hoc, par exemple une autre UBR. Selon une variante, le premier noeud accède à un autre réseau ad hoc en exécutant à nouveau les étapes 31 à 35. Par exemple, le premier noeud accède au protocole internet via une UBR d'un réseau de type ITS G5 dans un premier temps. Puis le premier noeud accède ensuite au protocole internet via une antenne relais d'un réseau de type LTE-V2X ou via un routeur d'un réseau de type IEEE 802.1 1s. Selon un autre exemple de réalisation, le premier noeud se désassocie d'un réseau de type LTE-V2X pour ensuite se connecter à un réseau de type ITS G5 basé sur IEEE 802.11p en exécutant les étapes 31 à 35 décrites ci-dessus.

L'invention concerne également un véhicule, par exemple automobile ou plus généralement un véhicule à moteur terrestre, comprenant le dispositif 2 de la figure 2.

## Revendications

1. Procédé de communication dans un réseau sans fil ad hoc comprenant une pluralité de noeuds, un premier noeud (10) de ladite pluralité correspondant à un dispositif embarqué dans un véhicule, ledit procédé comprenant les étapes suivantes, mises en oeuvre par ledit premier noeud :
- réception (31) d'au moins un message émis par un deuxième noeud (11) dudit réseau sans fil sur un canal de contrôle, ledit au moins un message comprenant une première information représentative d'un identifiant dudit deuxième noeud (11) ;
- vérification (32) de l'intégrité dudit au moins un message et de l'authenticité de ladite première information à partir de données d'en-tête dudit au moins un message et d'une signature associée audit au moins un message ;
- réception (33) de données informant ledit premier noeud (10) qu'un service d'accès au protocole internet est disponible, lesdites données comprenant une deuxième information représentative de l'identifiant de l'émetteur desdites données, lesdites données étant reçues sur un canal de service ;
- comparaison (34) de ladite première information et de ladite deuxième information ;
- accès (35) audit protocole internet sur ledit canal de service si la première information et la deuxième information correspondent.

2. Procédé selon la revendication 1, pour lequel ladite vérification de l'intégrité dudit au moins un message comprend la réception d'une clé publique dudit deuxième noeud (11), le premier noeud (10) et le deuxième noeud (11) faisant partie d'une infrastructure à clés publiques.

3. Procédé selon la revendication 1 ou 2, pour lequel ledit accès au protocole internet comprend la transmission d'une requête pour obtenir une adresse de protocole internet vers ledit deuxième noeud (11), ladite adresse de protocole internet étant allouée au premier noeud (10) par le deuxième noeud (11) à réception de ladite requête.

4. Procédé selon l'une quelconque des revendications 1 à 3, pour lequel ledit réseau sans fil ad hoc utilise un protocole de communication parmi les protocoles suivants :
- IEEE 802.11p;
- IEEE 802.11s ;
- 3GPP LTE-V2X.

5. Procédé selon l'une des revendications 1 à 4, pour lequel ledit canal de contrôle est un canal de type CCH, control channel, et ledit canal de service est un canal de type SCH., service channel.

6. Procédé selon l'une quelconque des revendications 1 à 5, pour lequel ledit au moins un message est de type CAM, Coopérative Awareness Message, ou DENM., Decentralized Environmental Notification Message.

7. Procédé selon l'une quelconque des revendications 1 à 6, pour lequel ledit deuxième noeud (11) est une Unité Bord de Route, UBR.

8. Dispositif (2) de communication adapté pour fonctionner dans un réseau sans fil ad hoc comprenant une pluralité de noeuds, ledit dispositif (2) correspondant à un premier noeud de ladite pluralité embarqué dans un véhicule, ledit dispositif comprenant une mémoire (21) associée à au moins un processeur (20) configuré pour la mise en oeuvre des étapes du procédé selon l'une quelconque des revendications 1 à 7.

9. Véhicule automobile comprenant le dispositif (2) selon la revendication 8.

10. Produit programme d'ordinateur comportant des instructions adaptées pour l'exécution des étapes du procédé selon l'une des revendications 1 à 7, lorsque le programme d'ordinateur est exécuté par au moins un processeur.

## Patentansprüche

1. Verfahren zur Kommunikation in einem drahtlosen Ad-hoc-Netzwerk, das eine Vielzahl von Knoten umfasst, wobei ein erster Knoten (10) der Vielzahl einem Gerät entspricht, das in einem Fahrzeug eingebaut ist, wobei das Verfahren die folgenden Schritte umfasst, die von dem ersten Knoten implementiert werden:
- Empfangen (31) mindestens einer Nachricht, die von einem zweiten Knoten (11) des drahtlosen Netzwerks über einen Steuerkanal gesendet wird, wobei die mindestens eine Nachricht eine erste Information umfasst, die für eine Kennung des zweiten Knotens (11) repräsentativ ist;
- Verifizieren (32) der Integrität der mindestens einen Nachricht und der Authentizität der ersten Information anhand von Kopfdaten der mindestens einen Nachricht und einer Signatur, die der mindestens einen Nachricht zugeordnet ist;
- Empfangen (33) von Daten, die den ersten Knoten (10) darüber informieren, dass ein Internetprotokoll-Zugangsdienst verfügbar ist, wobei die Daten eine zweite Information enthalten, die die Kennung des Senders der Daten darstellt, wobei die Daten über einen Dienstkanal empfangen werden ;
- Vergleich (34) der ersten Information und der zweiten Information ;
- Zugriff (35) auf das Internetprotokoll über den Dienstkanal, wenn die erste Information und die zweite Information übereinstimmen.

2. Verfahren nach Anspruch 1, wobei die Überprüfung der Integrität der mindestens einen Nachricht das Empfangen eines öffentlichen Schlüssels von dem zweiten Knoten (11) umfasst, wobei der erste Knoten (10) und der zweite Knoten (11) Teil einer Public-Key-Infrastruktur sind.

3. Verfahren nach Anspruch 1 oder 2, wobei der Zugriff auf das Internetprotokoll das Übertragen einer Anfrage zum Erhalt einer Internetprotokoll-Adresse an den zweiten Knoten (11) umfasst, wobei die Internetprotokoll-Adresse dem ersten Knoten (10) durch den zweiten Knoten (11) bei Empfang der Anfrage zugewiesen wird.

4. Verfahren nach einem der Ansprüche 1 bis 3, wobei das drahtlose Ad-hoc-Netzwerk ein Kommunikationsprotokoll aus den folgenden Protokollen verwendet:
- IEEE 802.11p ;
- IEEE 802.11s ;
- 3GPP LTE-V2X.

5. Verfahren nach einem der Ansprüche 1 bis 4, wobei der Steuerkanal ein Kanal vom Typ CCH, control channel, ist und der Dienstkanal ein Kanal vom Typ SCH, service channel, ist.

6. Verfahren nach einem der Ansprüche 1 bis 5, bei dem die mindestens eine Nachricht vom Typ CAM, Coopérative Awareness Message, oder DENM, Decentralized Environmental Notification Message, ist.

7. Verfahren nach einem der Ansprüche 1 bis 6, bei dem der zweite Knoten (11) eine Straßenrand-Einheit, UBR, ist.

8. Kommunikationsvorrichtung (2), die für den Betrieb in einem drahtlosen Ad-hoc-Netzwerk mit einer Vielzahl von Knoten geeignet ist, wobei die Vorrichtung (2) einem ersten Knoten der Vielzahl entspricht, der in einem Fahrzeug eingebaut ist, wobei die Vorrichtung einen Speicher (21) umfasst, der mit mindestens einem Prozessor (20) verbunden ist, der für die Durchführung von Schritten des Verfahrens nach einem der Ansprüche 1 bis 7 konfiguriert ist.

9. Kraftfahrzeug mit der Vorrichtung (2) nach Anspruch 8.

10. Computerprogrammprodukt mit Anweisungen, die für die Ausführung der Verfahrensschritte nach einem der Ansprüche 1 bis 7 geeignet sind, wenn das Computerprogramm von mindestens einem Prozessor ausgeführt wird.

## Claims

1. A method of communication in a wireless ad hoc network comprising a plurality of nodes, a first node (10) of said plurality corresponding to an in-vehicle device in a vehicle, said method comprising the following steps, implemented by said first node:
- receiving (31) at least one message transmitted by a second node (11) of said wireless network over a control channel, said at least one message comprising first information representative of an identifier of said second node (11);
- verifying (32) the integrity of said at least one message and the authenticity of said first information from header data of said at least one message and a signature associated with said at least one message;
- receiving (33) data informing said first node (10) that an internet protocol access service is available, said data including second information representative of the identifier of the sender of said data, said data being received over a service channel
- comparing (34) said first information and said second information;
- accessing (35) said internet protocol on said service channel if the first information and the second information match.

2. A method according to claim 1, wherein said checking the integrity of said at least one message comprises receiving a public key from said second node (11), the first node (10) and the second node (11) being part of a public key infrastructure.

3. A method according to claim 1 or 2, wherein said internet protocol access comprises transmitting a request to obtain an internet protocol address to said second node (11), said internet protocol address being allocated to the first node (10) by the second node (11) upon receipt of said request.

4. The method according to any one of claims 1 to 3, wherein said wireless ad hoc network uses one of the following communication protocols:
- IEEE 802.11p ;
- IEEE 802.11s ;
- 3GPP LTE-V2X.

5. The method according to any of claims 1 to 4, wherein said control channel is a CCH, control channel, and said service channel is a SCH, service channel.

6. A method according to any one of claims 1 to 5, wherein said at least one message is a CAM, Cooperative Awareness Message, or DENM, Decentralized Environmental Notification Message.

7. A method according to any one of claims 1 to 6, wherein said second node (11) is a Roadside Unit, RUM.

8. A communication device (2) adapted to operate in a wireless ad hoc network comprising a plurality of nodes, said device (2) corresponding to a first node of said plurality embedded in a vehicle, said device comprising a memory (21) associated with at least one processor (20) configured to implement the steps of the method according to any one of claims 1 to 7.

9. A motor vehicle comprising the device (2) according to claim 8.

10. A computer program product comprising instructions adapted to perform the steps of the method according to any of claims 1 to 7, when the computer program is executed by at least one processor.
